# DEMANDE DE BREVET EUROPEEN

(11) **EP 1 347 011 A1**
(43) Date de publication de la demande: **24.09.2003**
(21) Numéro de dépôt: 03290719.8
(22) Date de dépôt: 21.03.2003
(51) Int. Cl.: C08K 9/02, H01B 7/00

(54) **Gaine de câble comprenant une composition intumescente non-halogénée**

(30) Priorité: 21.03.2002 FR 0203551
(71) Demandeur: ALCATEL, 75008 Paris (FR)
(72) Inventeur: Barusseau, Sylvie, 91220 Le Plessis Pate (FR); Ducatel, Françoise, 78830 Bonnelles (FR); Gouchi, Aziza, 91460 Marcoussis (FR)
(74) Mandataire: Sciaux, Edmond

(57) **Abrégé**

La présente invention a pour objet une gaine (7) de câble (1) comprenant au moins en partie une composition intumescente non-halogénée, caractérisée en ce que ladite composition contient un mélange de
- une matrice polymère choisie parmi un polyéthylène, un polypropylène, un copolymère de l'éthylène, un copolymère du propylène, un silicone, un polyamide et un mélange de ceux-ci, et
- au moins un additif ignifugeant constitué d'un premier composé inorganique à structure cristalline feuilletée et d'un second composé inorganique inséré entre les feuillets dudit premier composé, ledit second composé étant capable de provoquer l'écartement desdits feuillets sous l'effet de la chaleur.

Cette gaine est destinée à être utilisée comme retardateur de flamme dans les câbles de télécommunication.

## Description

La présente invention se rapporte à une gaine de câble comprenant une composition intumescente ne contenant pas d'halogène, en particulier une gaine ignifuge pour câble notamment pour câble de télécommunication. L'invention concerne aussi un câble dont les propriétés, notamment ignifuges, sont sensiblement améliorées par rapport aux câbles actuellement connus.

Les câbles, en particulier ceux utilisés pour les télécommunications, comportent une ou plusieurs âmes entourées d'un revêtement protecteur comportant une ou plusieurs couches. L'âme peut être une âme métallique ou une fibre optique. Le revêtement entourant l'âme est composé de couches ayant des propriétés diverses, par exemple isolante ou hydrofuge. Dans le cas où le câble comprend plusieurs âmes revêtues, celles-ci sont rassemblées en faisceau. Ce faisceau est également entouré d'une gaine comprenant au moins une couche, habituellement la couche externe, qui est réalisée à partir d'une composition lui conférant des propriétés ignifuges.

Les matériaux utilisés pour le gainage de câbles doivent satisfaire à un certain nombre d'exigences. Ils doivent être ni polluants, ni toxiques. Ils doivent bien résister au feu et retarder l'inflammation. Leur combustion ne doit pas entraîner de fortes émissions de fumée. Il est par ailleurs souhaitable que ces fumées soient de faible opacité, peu toxiques et peu corrosives. En outre, les matériaux de gainage doivent avoir une bonne résistance mécanique à la déformation lorsqu'ils sont exposés à la chaleur. Notamment lorsque les matériaux fondent sous l'effet de la chaleur, les gouttes formées lors de la fusion engendrent des risques de brûlures et peuvent en outre conduire à la propagation du feu en générant de nouveaux foyers.

Pour réaliser une telle couche, on connaît des compositions à base de polymères contenant des additifs ignifugeants. Actuellement, on cherche à remplacer les compositions polymères contenant des additifs halogénés qui étaient largement utilisés jusqu'à présent pour le gainage et l'isolation de câble. En effet, les normes tendent à interdire l'utilisation de tels additifs non seulement en raison de la toxicité et corrosivité des produits dégagés lors de leur combustion, mais aussi en raison de possibles risques sur la santé lors de leur fabrication et de leur incinération. Par ailleurs, on tend aujourd'hui à privilégier la mise en oeuvre de produits facilement dégradables, voire recyclables. Ces matériaux sans halogène retardant la propagation de la flamme et du feu sont souvent aussi désignés par HFFR, acronyme anglais pour « halogen free fire retardant ».

Une solution connue pour rendre les gaines de câble en polymère plus résistantes au feu consiste à leur ajouter une charge constituée d'un hydroxyde métallique comme Al(OH)₃ ou Mg(OH)₂. Toutefois, il est nécessaire d'introduire une quantité importante de charge pour obtenir une protection suffisante contre la flamme. On constate alors une dégradation des propriétés mécaniques et électriques du matériau. En outre, ces compositions ont une viscosité élevée ; elles sont de ce fait difficiles à mettre en oeuvre, notamment par extrusion.

On connaît aussi des compositions contenant l'association d'une huile silicone, de carbonate de calcium et de stéarate de magnésium. Mais les performances de ces compositions peuvent encore être améliorées.

Des additifs provoquant l'intumescence, c'est à dire le gonflement, d'une composition polymère sont connus, mais présentent des inconvénients. Ainsi, le pentaérythritol souvent utilisé commence à se décomposer à partir de 200°C ce qui risque de poser des problèmes lors de l'extrusion. La mélamine, également utilisée comme agent de carbonisation, augmente de façon significative la concentration en ions cyanure dans les produits de dégradation.

Il est également connu, du document EP-1 026 700, une gaine de câble en matériau sans halogène composée d'un polymère, d'un composant provoquant l'intumescence du matériau et d'un fondant formant une mousse inorganique ininflammable. Cette composition réticulable comprend en outre comme agent de réticulation des silanes ou des peroxydes. La réticulation statique des gaines extrudées est réalisée dans une étape séparée, après l'extrusion du câble. Par ce procédé, on obtient une réticulation complète et un matériau difficilement recyclable.

La présente invention a pour but de proposer une gaine de câble comprenant une composition intumescente non-halogénée présentant simultanément de bonnes propriétés mécaniques et ignifuges. D'une manière générale, l'invention propose une gaine de câble qui ne présente pas les inconvénients de l'art antérieur.

Ce problème est résolu par gaine de câble comprenant au moins en partie une composition intumescente non-halogénée. La composition contient un mélange d'une matrice polymère et au moins un additif ignifugeant. La matrice est choisie parmi un polyéthylène, un polypropylène, un copolymère de l'éthylène, un copolymère du propylène, un silicone, un polyamide et un mélange de ceux-ci. L'additif est constitué d'un premier composé inorganique à structure cristalline feuilletée et d'un second composé inorganique inséré entre les feuillets du premier composé, le second composé étant capable de provoquer l'écartement des feuillets sous l'effet de la chaleur.

Le premier composé peut être choisi parmi un graphite et un silicate à structure feuilletée appelé phyllosilicate, comme un mica ou une argile. Parmi les argiles, on pourra utiliser un talc, une vermiculite, une kaolinite, une smectite ou un mélange quelconque de plusieurs de ces argiles. Dans le groupe des smectites, on pourra notamment choisir la montmorillonite, la bentonite, la beidellite, la nontronite, la saponite, l'hectorite ou un mélange des précédentes.

Selon un mode de réalisation préféré de l'invention, le premier composé est un graphite. Le graphite a une structure cristalline composée d'atomes de carbone formant des plans empilés parallèlement. Des molécules d'un autre composé inorganique peuvent être insérées entre ces plans. L'insertion de ces molécules entre les plans du graphite permet d'obtenir un additif ignifugeant selon la présente invention qui est un graphite dit "expansible". Lorsqu'un graphite expansible est exposé à la chaleur ou à une flamme, les molécules insérées se décomposent en générant du gaz. La pression de ce gaz oblige les plans graphitiques à s'écarter, et le graphite se dilate. Le graphite expansé a une faible densité, il n'est pas combustible et c'est un bon isolant thermique car il réfléchit jusqu'à 50% de la chaleur radiante.

Un graphite expansible est un produit commercialement disponible. Le tableau ci-dessous donne des exemples de graphite expansible commercial utilisables dans la présente invention.

**TABLEAU 1**

| Fournisseur | Référence du produit | Taille des paillettes | Température de début d'expansion | Volume d'expansion à 1000°C |
|---|---|---|---|---|
| Nissho Iwaï | SS-100 | 100 à 200µm | > 200°C | |
| | SSFF | 300 à 500µm | > 200°C | |
| Timcal | KH80 | | | |
| NGS naturgraphit | EX 100 SC | ≥ 300µm | 250°C | 350cm³/g |
| | EX CX325 HMY | ≤ 45µm | 250°C | 20cm³/g |
| | EX EF95 HMY | ≤ 150µm | 250°C | 100-110cm³/g |
| | EX 8580 170 HMY | 150 à 300µm | 230°C | 170cm³/g |
| Carbone Lorraine | Graphex CK 23 | 480µm | > 200°C | 290cm³/g |

De manière préférée on choisira un graphite expansible dont la taille de paillettes est au moins égale à 45µm, de préférence au moins égale à 100µm et de préférence encore au moins égale à 300µm.

Le second composé inorganique a pour fonction de provoquer, sous l'effet de la chaleur, l'écartement des feuillets entre lesquels il est inséré. Cet écartement est obtenu par la pression des molécules du second composé qui s'exerce sur les feuillets. Cette pression peut être due à une augmentation de volume ou un changement d'état physique causé par l'élévation de température. Selon un mode de réalisation particulier, le second composé inorganique a la propriété de se décomposer en dégageant du gaz sous l'effet de la chaleur. On choisira de préférence un acide fort comme l'acide sulfurique H₂SO₄.

La matrice est un polymère ou un mélange de polymères qui sont usuellement utilisés pour le revêtement de câble. La matrice est de préférence un polymère ou un mélange de polymères choisi parmi un polymère thermoplastique et un élastomère, de préférence un élastomère thermoplastique. La matrice est de préférence choisie parmi un polyéthylène (PE), un polypropylène (PP) et leurs copolymères, un silicone, un polyamide (PA), et un mélange de ceux-ci. Parmi les copolymères de l'éthylène, on peut choisir un copolymère d'éthylène et d'acétate de vinyle (EVA), un copolymère d'éthylène et de propylène (EPR, EPM ou EPDM), un copolymère d'éthylène et d'acrylate d'alkyl (EBA, EEA ou EMA), un copolymère d'éthylène et d'acide acrylique, un terpolymère d'éthylène, ces mêmes polymères portant des groupements spécifiques tels que des groupes acides ou époxy, et les mélanges de ceux-ci. De préférence le polymère est un polymère thermoplastique, notamment un copolymère de l'éthylène, en particulier un copolymère d'éthylène et d'acétate de vinyle (EVA). On utilise de préférence un EVA renfermant jusqu'à 80% en poids d'acétate de vinyle, et de préférence encore de 10 à 70% en poids d'acétate de vinyle. La matrice polymère représente de préférence de 25 à 85 parties en poids de la composition, de préférence 30 à 85 parties en poids.

Selon une variante, la composition contient un antioxydant. On utilise par exemple le 4,4'-thiobis(6-tert-butyl-m-cresol) qui est un antioxydant notamment utilisé pour les élastomères naturels ou synthétiques, en particulier le composé référencé "SANTONOX TBMC fourni par la société FLEXSYS. La quantité d'antioxydant dans la composition est de préférence compris entre 0,05 et 2 parts, et en particulier de 0,1 à 1 part en poids.

Selon une autre variante, la composition contient un composé appelé "source de charbonnement" qui a pour rôle de fournir un volume important de charbon pour ralentir la combustion. Comme source de charbonnement peuvent être utilisés des composés organiques riches en carbone qui contiennent des groupes fonctionnels formant un charbon lorsqu'ils sont exposés à la chaleur. Ils peuvent être utilisés seuls ou en présence d'un "promoteur de charbonnement" qui amplifie leur effet. Ainsi on peut utiliser des polymères tels que l'éthylène vinyle alcool, et de préférence un polyamide comme le polyamide 6 (PA 6).

Selon encore une variante, la composition contient un promoteur de charbonnement. Le promoteur de charbonnement est en général choisi parmi les composés libérant un acide inorganique à température élevée. De préférence on utilise comme promoteur de charbonnement le polyphosphate d'ammonium (APP) qui forme de l'acide polyphosphorique.

Selon encore une autre variante, la composition contient en outre une charge qui est le plus souvent un composé inorganique. Cette charge est choisie notamment parmi un mica, une argile comme un kaolin ou un talc, un oxyde minéral comme une magnésie, un graphite et les mélanges de ceux-ci. Bien entendu, on pourra également utiliser d'autres charges couramment utilisées en câblerie. L'addition d'une charge minérale à structure particulière, telles qu'une charge à structure feuilletée (graphite, mica, kaolin, talc, ...) ou comprenant des pseudo-feuillets (argile fibreuse, sépiolite, ...) ou une grande surface spécifique (tamis moléculaire, zéolite, ...), permet de renforcer encore les propriétés de tenue au feu de la composition. Selon l'invention, la charge représente au plus 40 parts en poids de la composition, et de préférence au plus 20 parts en poids.

Par ailleurs, la composition peut aussi contenir d'autres additifs couramment employés en gainerie comme un catalyseur ou un fondant (glass-former).

La présente invention a comme avantage d'améliorer la tenue au feu des gaines de câble à base de polymère. Les gaines selon la présente invention ont un indice limite d'oxygène (IOL) élevé et possède les propriétés requises pour satisfaire aux tests définis dans la norme CEI 332, notamment les tests CEI 332-1 et CEI 332-2 relatifs à la tenue de fils de cuivre gainés. Par rapport aux gaine connues, la composition selon l'invention contient un taux de charge faible. Or on a constaté qu'un taux de charge élevé conduit à une dégradation des caractéristiques mécaniques du matériau.

Pour former la gaine de câble selon l'invention, il n'est pas nécessaire de réticuler la composition. Celle-ci ne contient donc pas d'agent de réticulation, tel qu'un peroxyde ou un silane.

L'invention a encore pour objet un câble comportant au moins une âme et au moins une gaine comprenant au moins en partie la composition intumescente non-halogénée décrite précédemment.

Selon une variante, l'âme est une fibre optique. La fibre optique est entourée d'un revêtement protecteur et d'une gaine, la gaine et/ou le revêtement comprenant au moins en partie la composition selon l'invention.

Selon une autre variante l'âme est un conducteur métallique. L'âme métallique est entourée d'une gaine selon l'invention comprenant au moins en partie la composition décrite précédemment.

L'invention a encore pour objet un procédé de fabrication d'un tel câble comprenant une étape d'extrusion d'une composition intumescente non-halogénée contenant un mélange d'une matrice polymère choisie parmi un polyéthylène, un polypropylène, un copolymère de l'éthylène, un copolymère du propylène, un silicone, un polyamide et un mélange de ceux-ci, et au moins un additif ignifugeant constitué d'un premier composé inorganique à structure cristalline feuilletée et d'un second composé inorganique inséré entre les feuillets dudit premier composé autour de ladite âme pour former une gaine.

L'invention a aussi pour objet l'utilisation de la gaine de câble décrite précédemment, comme retardateur de flamme dans les câbles de télécommunication.

D'autres caractéristiques et avantages de la présente invention apparaîtront au cours de la description suivante de modes de réalisation donnés à titre illustratif, mais nullement limitatif, en référence au dessin annexé sur lequel
- la figure 1 est une vue en coupe d'un câble à fibre optique comprenant l'invention,
- la figure 2 représente schématiquement la structure cristalline du graphite et indique comment s'effectue l'insertion d'un composé inorganique entre les feuillets,
- les figures 3a et 3b montrent l'aspect d'un graphite respectivement avant et après expansion,

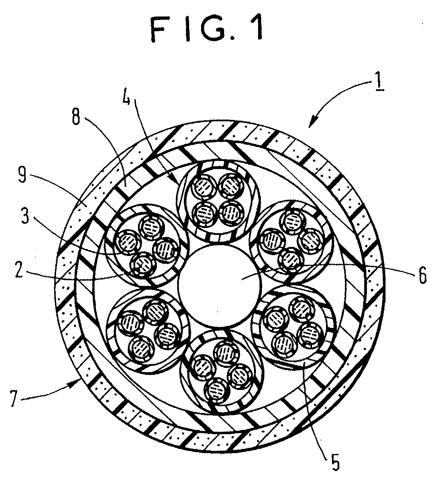

La figure 1 représente un câble **1** composé de plusieurs âmes **2** qui sont ici des fibres optiques. Les fibres optiques **2** sont composées d'un coeur (core) entouré d'une gaine optique à base de silice (cladding). Elles sont recouvertes d'un revêtement **3** (coating) éventuellement coloré pour permettre de les distinguer les unes des autres. Les fibres optiques **2** sont réunies en faisceaux **4** et maintenues par une peau de protection commune **5** destinée à assurer la cohésion du faisceau **4**. Le câble **1** selon l'invention comporte plusieurs faisceaux **4** groupés, disposés autour d'un élément rigide **6** et entourés d'une gaine **7** (sheath) en matériau flexible qui est extrudée directement sur les faisceaux **4**. La gaine **7** selon l'invention comporte au moins une couche interne **8** et une couche externe **9**. La couche externe **9** est constituée au moins en partie d'une composition ignifuge non-halogénée comme décrit précédemment. Le câble **1** à fibre optique selon l'invention est notamment utilisable pour les télécommunications.

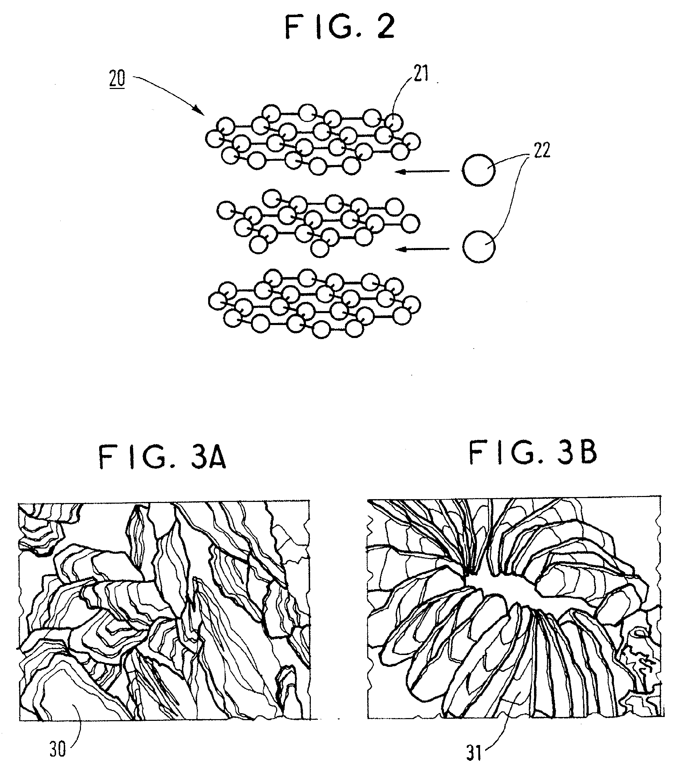

La figure 2 montre la structure cristalline d'un graphite, utilisable dans le présente invention, composée de plans cristallins **20**, constitués d'atomes de carbones **21**, entre lesquels une molécule **22** peut s'intercaler. La figure 3a est une vue au microscope électronique d'un graphite expansible dans son état initial, lorsqu'il est incorporé à la matrice pour obtenir la composition de l'invention. On y voit les plans cristallins **30** superposés du graphite. La figure 3b montre le même graphite dans un état expansé. On observe que les plans **31** se sont écartés sous l'effet de la chaleur. Sous l'action d'un flux calorifique, le graphite expansible contenu dans la composition se dilate et crée ainsi une barrière au feu qui protège des flammes les polymères constitutifs de la gaine du câble.

### EXEMPLE 1

Une composition A selon l'invention a été préparée qui comprend :

| | |
|---|---|
| matrice polymère | 100 parts en poids |
| antioxydant | 1 part |
| source de charbonnement | 7 parts |
| promoteur de charbonnement | 50 parts |
| additif ignifuge | 5 parts |

Dans la composition A selon l'invention, la matrice polymère est un EVA de référence ELVAX 260 fourni par DUPONT DE NEMOURS contenant 28% en poids d'acétate de vinyle et ayant un indice de fluidité à chaud de 6. L'antioxydant porte ici la référence SANTONOX TBMC fourni par la société FLEXSYS. On y ajoute une source de charbonnement qui est un polyamide PA 6, et un promoteur de charbonnement qui est du polyphosphate d'ammonium (APP) de référence EXOLITE AP 422.

L'additif ignifuge est un graphite expansible de référence EX 100Sc ayant une taille de paillettes supérieure à 300µm fourni par la société NGS NATURGRAPHIT GmbH. La composition A ne contient pas d'halogène, ni d'agent de réticulation. Les compositions selon l'invention ne sont pas réticulées.

La matrice polymère EVA est malaxée dans un mélangeur avec le polyamide 6 et l'antioxydant à une température de 230°C. Après homogénéisation du mélange et refroidissement à une température de 180°C, on y ajoute le graphite expansible puis la charge, et enfin le polyphosphate d'ammonium APP. Le mélange ainsi obtenu est mis en forme de plaque pour la détermination des caractéristiques de tenue au feu et des propriétés mécaniques de chaque composition.

### EXEMPLE 2

Une composition B selon l'invention qui a été préparée est analogue à la composition A à l'exception du fait qu'elle contient en outre 10 parts d'une charge minérale qui est un kaolin.

### EXEMPLE 3

Une composition C selon l'invention a été préparée qui est analogue à la composition A à l'exception du fait qu'elle contient en outre 20 parts d'une charge minérale qui est un kaolin.

### EXEMPLE 4

Une composition D selon l'invention a été préparée qui est analogue à la composition A à l'exception du fait qu'elle contient en outre 40 parts d'une charge minérale qui est un kaolin.

### EXEMPLE 5

Une composition E selon l'invention a été préparée qui est analogue à la composition D à l'exception du fait que l'additif ignifuge est un graphite expansible de référence EX CX 325 HMY ayant une taille de paillettes d'au plus 45µm fourni par la société NGS NATURGRAPHIT GmbH.

Le tableau 2 ci-dessous résume les exemples 1 à 5 de compositions A à E selon l'invention. Les quantités sont indiquées en nombre de parts en poids par rapport à la matrice polymère qui représente 100 parts.

**TABLEAU 2**

| Référence de la composition | A | B | C | D | E |
|---|---|---|---|---|---|
| EVA "ELVAX 260" | 100 | 100 | 100 | 100 | 100 |
| "SANTONOX TBMC" | 1 | 1 | 1 | 1 | 1 |
| PA 6 | 7 | 7 | 7 | 7 | 7 |
| APP "EXOLITE AP 422" | 50 | 50 | 50 | 50 | 50 |
| Kaolin | 0 | 10 | 20 | 40 | 40 |
| Graphite expansible : EX 100Sc | 5 | 5 | 5 | 5 | |
| EX CX 325 HMY | | | | | 5 |

### EXEMPLE 6

A titre de comparaison, on a également testé une composition X contenant

| | |
|---|---|
| EVA "ELVAX 260" | 100 parts en poids |
| SANTONOX TBMC | 1 part |
| PA 6 | 7 parts |
| magnésie Mg(OH)₂ | 50 parts |

Dans la composition X, la charge est de la magnésie Mg(OH)₂.

### EXEMPLE 7

A titre de comparaison, on a aussi testé une composition Y, analogue à la composition X, mais contenant 100 parts de charge.

### EXEMPLE 8

A titre de comparaison, on a également testé une composition Z contenant

| | |
|---|---|
| Polyéthylène (PE et VLDPE) | 100 parts en poids |
| "SANTONOX TBMC" | 1 part |
| charge CaO₃ | 60 parts |
| Silicone | 8 parts |
| Stéarate de magnésium | 6 parts |

Dans la composition Z, le terme Silicone représente un mélange équipondéral de deux huiles silicones portant respectivement les références PDMS (polydiméthyle siloxane) (4 parts) et NG 200 (4 parts).

Sous l'effet de la chaleur, le silicone et la charge de carbonate de calcium réagissent pour former à la surface de la gaine une barrière minérale de silicate de calcium. Le stéarate de Mg migre vers la surface du revêtement en cas d'incendie. Il se décompose en donnant un résidu minéral venant renforcer la barrière minérale de silicate de calcium dont il favorise la formation. Les cendres restent cependant friables et donc moins efficaces.

### EVALUATION

Dans un premier temps, on a évalué les propriétés mécaniques des compositions A à E selon la présente invention et des compositions comparatives X, Y et Z au point de vue de leur résistance à la rupture R et de leur allongement A sous traction selon la norme ASTM D638. On a également observé le comportement de ces compositions soumises au test UL94 établi pour mettre en évidence le comportement au gouttage des peintures et vernis.

Dans un second temps, on a évalué leur résistance à l'inflammation. On a d'abord mesuré l'indice d'oxygène limite IOL (norme ASTM D2863-77A). La tenue au feu des câbles a été évaluée grâce à la norme CEI 332. Cette norme comporte trois volets, dont notamment les tests CEI 332-1 et CEI 332-2 qui porte sur la tenue au feu des fils de cuivre gainés

Les compositions précédemment préparées sont d'une part mises en forme sous presse pour obtenir des plaques d'épaisseur souhaitée : une épaisseur de 1 mm pour la détermination des caractéristiques mécaniques et une épaisseur de 3mm pour la caractérisation selon le test UL94. D'autre part une partie de la composition est extrudée sur un fil déjà isolé avec un mélange non ignifugé (épaisseur de l'isolation : 0,5mm et épaisseur de la gaine : 0,5mm) et le câble ainsi obtenu est testé suivant la norme CEI 332.

Les résultats des tests sont rassemblés dans le tableau 3 ci-après.

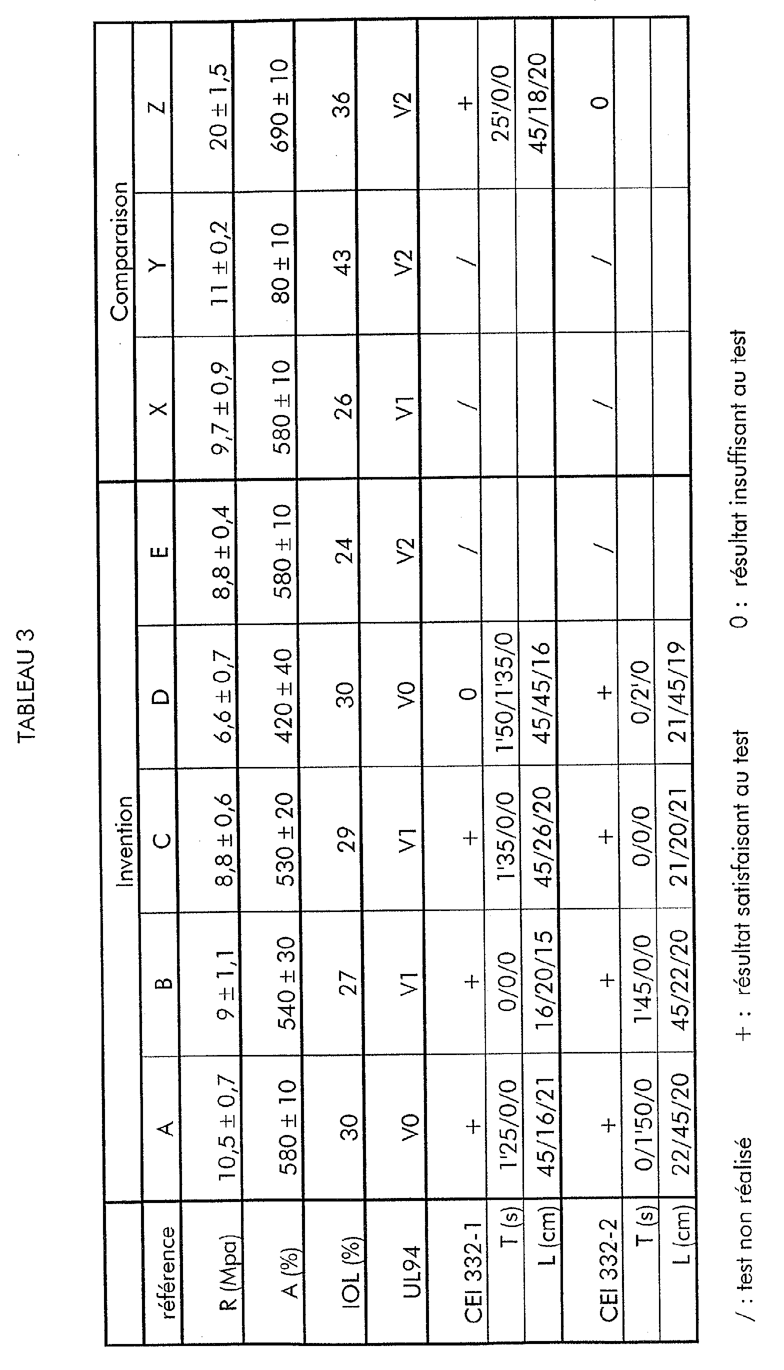

Lorsqu'on augmente la quantité de charge de kaolin, on observe une dégradation des propriétés mécaniques des compositions A à D. On remarque la même évolution pour la charge de Mg(OH)₂ entre les compositions X et Y.

L'indice d'oxygène limite IOL renseigne sur l'inflammabilité d'un matériau au contact d'une flamme à température ordinaire. Toutes les compositions testées présentent des valeurs d'IOL élevées, supérieure à 24. Les résultats donnés dans le tableau 3 représentent la moyenne de plusieurs mesures. A titre d'illustration, les valeurs de 24 correspondant à l'échantillon référencé E et de 26 correspondant à l'échantillon référencé X peuvent être considérées comme du même ordre compte-tenu des incertitudes de mesure.

Les compositions selon l'invention ont été soumises au test UL94. Un barreau d'essai est fixé horizontalement ou verticalement, tenu par l'une de ses extrémités. L'extrémité libre est exposée à une flamme de gaz dans des conditions prescrites. On évalue alors le comportement du barreau en utilisant le classement suivant. La notation V0 signifie que la composition résiste bien au test, c'est à dire que la composition ne brûle pas et ne goutte pas lorsqu'elle est exposée aux conditions du test. La notation V1 représente un comportement intermédiaire, c'est à dire que la composition ne brûle pas, elle flue et peut goutter. La notation V2 est le signe d'une moindre tenue du matériau, c'est à dire qu'il brûle et coule. On remarque que la composition A ne contenant pas de charge présente un comportement aussi bon que la composition D qui a le taux de charge en kaolin le plus élevé (40 parts). Les compositions B et C dont les taux de charge sont plus faibles (10 et 20 parts) donnent des résultats un peu inférieurs.

La tenue au feu est estimée par les tests CEI 332-1 et CEI 332-2, le test CEI 332-2 étant considéré comme plus exigeant que le test CEI 332-1. Le principe consiste à mesurer la longueur L de la brûlure de la gaine après exposition à une flamme et le temps T de combustion correspondant. Le test est déclaré satisfaisant (+) lorsque deux essais sur trois sont réussis ; il est déclaré insuffisant (0) dans le cas contraire. Les compositions selon l'invention obtiennent des résultats satisfaisants dans l'ensemble. La composition Z de l'art antérieur obtient un résultat acceptable pour le test CEI 332-1, mais ne passe pas le test CEI 332-2.

En conclusion, les meilleures performances sont observées pour la composition A selon l'invention ne contenant pas de charge et les compositions B et C ayant un faible taux de charge. Ces performances sont globalement supérieures à celles présentées par les compositions de l'art antérieur. L'intégration de la composition selon l'invention dans la couche 9 de matériau de gainage permet une augmentation sensible des caractéristiques mécaniques, de tenue et de propagation au feu.

Bien entendu, la présente invention n'est pas limitée aux modes de réalisation décrits, mais elle est susceptible de nombreuses variantes accessibles à l'homme de l'art sans que l'on s'écarte de l'esprit de l'invention.

En particulier, on pourra sans sortir du cadre de l'invention modifier la composition de la matrice polymère. Les différents ingrédients secondaires entrant dans la réalisation de la matrice, ainsi que leurs proportions relatives, pourront être changés. Des additifs, notamment en vue de faciliter la mise en forme du revêtement par exemple par extrusion, pourront y être incorporés dans des proportions mineures.

Bien que l'invention ait été décrite en détail pour une application aux gaines de câble à fibre optique, l'invention peut être appliquée de façon similaire pour assurer la protection au feu de tout type de câble utilisé pour les télécommunications ou d'autres types de câbles.

## Revendications

1. Gaine (7) de câble (1) comprenant au moins en partie une composition intumescente non-halogénée, **caractérisée en ce que** ladite composition contient un mélange de
- une matrice polymère choisie parmi un polyéthylène, un polypropylène, un copolymère de l'éthylène, un copolymère du propylène, un silicone, un polyamide et un mélange de ceux-ci, et
- au moins un additif ignifugeant constitué d'un premier composé inorganique à structure cristalline feuilletée et d'un second composé inorganique inséré entre les feuillets dudit premier composé, ledit second composé étant capable de provoquer l'écartement desdits feuillets sous l'effet de la chaleur.

2. Gaine selon la revendication 1, dans laquelle ledit premier composé est choisi parmi un graphite et un phyllosilicate.

3. Gaine selon la revendication 2, dans laquelle ledit premier composé est un graphite.

4. Gaine selon la revendication 3, dans laquelle ledit graphite a une taille de paillettes au moins égale à 45µm.

5. Gaine selon la revendication 4, dans laquelle ledit graphite a une taille de paillettes au moins égale à 100µm.

6. Gaine selon la revendication 5, dans laquelle ledit graphite a une taille de paillettes au moins égale à 300µm.

7. Gaine selon l'une des revendications précédentes, dans laquelle ledit second composé inorganique est l'acide sulfurique.

8. Gaine selon la revendication 7, dans laquelle ladite matrice est choisie parmi un copolymère d'éthylène et d'acétate de vinyle, un copolymère d'éthylène et de propylène, un copolymère d'éthylène et d'acrylate d'alkyl, un copolymère d'éthylène et d'acide acrylique, un terpolymère d'éthylène et les mélanges de ceux-ci.

9. Gaine selon la revendication 8, dans laquelle ladite matrice est un copolymère d'éthylène et d'acétate de vinyle.

10. Gaine selon la revendication 9, dans laquelle ledit copolymère d'éthylène et d'acétate de vinyle renferme jusqu'à 80% en poids d'acétate de vinyle.

11. Gaine selon la revendication 10, dans laquelle ledit copolymère d'éthylène et d'acétate de vinyle renferme de 10 à 70% en poids d'acétate de vinyle.

12. Gaine selon l'une des revendications précédentes, dans laquelle ladite matrice polymère représente de 25 à 85 parts en poids de ladite composition.

13. Gaine selon la revendication 12, dans laquelle ladite matrice polymère représente 30 à 85 parts en poids de ladite composition.

14. Gaine selon l'une des revendications précédentes, dans laquelle ladite composition contient en outre un antioxydant.

15. Gaine selon l'une des revendications précédentes, dans laquelle ladite composition contient en outre une source de charbonnement qui est un composé organique riche en carbone contenant des groupes fonctionnels formant un charbon lorsqu'ils sont exposés à la chaleur.

16. Gaine selon la revendication 15, dans laquelle ladite source est un polyamide.

17. Gaine selon l'une des revendications précédentes, dans laquelle ladite composition contient en outre un promoteur de charbonnement choisi parmi les composés libérant un acide inorganique à température élevée.

18. Gaine selon la revendication 17, dans laquelle ledit promoteur est un polyphosphate d'ammonium.

19. Gaine selon l'une des revendications précédentes, dans laquelle ladite composition contient en outre une charge.

20. Gaine selon la revendication 19, dans laquelle ladite charge est choisie parmi un mica, une argile, un oxyde minéral, un graphite et les mélanges de ceux-ci.

21. Gaine selon la revendication 20, dans laquelle ladite charge représente au plus 40 parts de ladite composition.

22. Gaine selon la revendication 21, dans laquelle ladite charge représente au plus 20 parts de ladite composition.

23. Gaine selon l'une des revendications précédentes, dans laquelle ladite composition est non réticulée.

24. Câble (1) comportant au moins une âme (2) et au moins une gaine (7) selon l'une des revendications 1 à 23.

25. Câble selon la revendication 24, dans lequel ladite âme est une fibre optique (2).

26. Câble selon la revendication 24, dans lequel ladite âme est un conducteur métallique.

27. Câble selon la revendication 24, dans lequel ladite composition est non réticulée.

28. Procédé de fabrication d'un câble selon l'une des revendications 24 à 27, comprenant une étape d'extrusion d'une composition intumescente non-halogénée contenant un mélange d'une matrice polymère choisie parmi un polyéthylène, un polypropylène, un copolymère de l'éthylène, un copolymère du propylène, un silicone, un polyamide et un mélange de ceux-ci, et au moins un additif ignifugeant constitué d'un premier composé inorganique à structure cristalline feuilletée et d'un second composé inorganique inséré entre les feuillets dudit premier composé autour de ladite âme pour former une gaine.

29. Utilisation d'une gaine de câble selon l'une des revendications précédentes, comme retardateur de flamme dans les câbles de télécommunication.
